# EUROPÄISCHE PATENTSCHRIFT

(11) **EP 1 941 711 B1**
(45) Veröffentlichungstag und Bekanntmachung des Hinweises auf die Patenterteilung: **20.01.2010**
(21) Anmeldenummer: 06806283.5
(22) Anmeldetag: 14.10.2006
(51) Int. Cl.: H04M 3/28

(54) **VERFAHREN UND EINRICHTUNG ZUR ÜBERPRÜFUNG EINES TEILNEHMERANSCHLUSSES**
METHOD AND DEVICE FOR CHECKING A SUBSCRIBER LINE
PROCEDE ET DISPOSITIF POUR VERIFIER UN RACCORDEMENT D'ABONNE

(30) Priorität: 20.10.2005 DE 102005050341
(43) Veröffentlichungstag der Anmeldung: 09.07.2008
(73) Patentinhaber: Nokia Siemens Networks GmbH & Co. KG, 81541 München (DE)
(72) Erfinder: DOLLINGER, Rudolf, 81243 München (DE)
(74) Vertreter: Fischer, Michael
(86) Internationale Anmeldenummer: PCT/EP2006/009941
(87) Internationale Veröffentlichungsnummer: WO 2007/045410

(56) Entgegenhaltungen:
- EP-A2- 0 505 670
- WO-A-03/030392
- WO-A-2004/099711
- US-A- 5 917 885

## Beschreibung

Die Erfindung betrifft ein Verfahren zur Überprüfung eines Teilnehmeranschlusses, vorzugsweise mit einer analog/digitalen Teilnehmerschaltung für ein analoges Telefon, nach dem Oberbegriff des Anspruches 1 sowie eine dazugehörige Einrichtung nach dem Oberbegriff des Anspruches 3.

Dabei ist ein Telekommunikationsgerät mit dem Teilnehmeranschluss (sogenannte SLCA = Subscriber Line Circuit Analogue) über zwei elektrischen Leitungen (Adern) geschaltet. Der Teilnehmeranschluss weist eine Teilnehmerschaltung und einen (analog/digitalen) Kodierer/Dekodierer auf, über welche eine Verbindung mit einem digitalem Telekommunikationsnetz möglich ist. Bei Beschwerden von Teilnehmern oder zur Überprüfung von zugesicherten Eigenschaften muss die ordnungsgemäße Funktion der Teilnehmerschaltung getestet werden. Einer dieser Tests ist eine Messung einer Symmetrie an Eingängen der Teilnehmerschaltung wesentlich, indem z. B. bei einer Unsymmetrie ein dortiges Gleichtakt-Störsignal die Signalqualität der Teilnehmerschaltung beeinträchtigt.

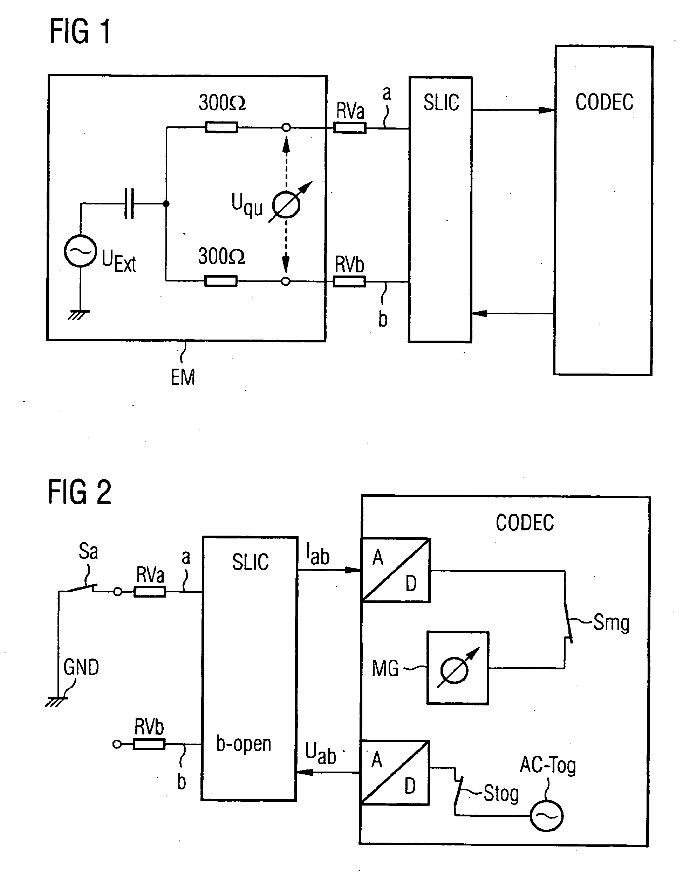

Zur Ermittlung dieser Unsymmetrie wird ein erstes Ausführungsbeispiel gemäss FIG 1 dargestellt. An Anschlüssen eines Teilnehmergerätes, d.h. an Eingängen (Ader a, b) einer Teilnehmerschaltung SLCA mit einer ersten für die Adern zuführende Schaltung SLIC (Subscriber Line Integrated Circuit) und einem Kodierer-Dekodierer CODEC (Coder-Decoder) wird ein externes Messgerät EM angeschaltet, mit welchem ein Ton Uext erzeugt und über Ausgänge des Messgerätes EM jeweils in eine Ader a, b über einen Widerstand Rva, RVb (z. B. 300 Ohm) in DC-entkoppelter Weise gleichzeitig eingespeist wird. Dieser Ton bildet ein Gleichtakt-Signal und wird nach Reflexion an der Teilnehmerschaltung als Spannung Uqu zwischen den Ausgängen des Messgerätes EM gemessen. Die gemessene Spannung Uqh liefert ein Maß für die Unsymmetrie der Teilnehmerschaltung. Jedoch erfordert diese Methode die Verwendung eines externen Messgerätes.
Ein Beispiel ist aus WO 2004/099711 bekannt.

Der Erfindung liegt die Aufgabe zugrunde, eine Unsymmetrie zwischen zwei Anschlüssen eines Teilnehmerkommunikationsgerätes ohne Einsatz eines externen Messgerätes zu ermitteln.

Erfindungsgemäß wird die Aufgabe durch die Merkmale der Ansprüche 1 und 3 gelöst.

Dabei wird zunächst ein Verfahren zur Überprüfung eines Teilnehmeranschlusses mit einer ersten und einer zweiten elektrischen Leitung dargestellt, die je über eine Teilnehmerschaltung an einem Kodierer/Dekodierer angeschlossen sind. Dadurch dass:
A)
   - die erste Leitung an eine elektrische Masse geschaltet wird,
   - ein Widerstand der zweiten Leitung auf einen hohen Wert erhöht wird (bzw. derart dass kein Strom in der geöffneten Leitung fliesst),
   - aus dem Kodierer/Dekodierer ein Tonsignal in die erste Leitung abgegeben wird, das weiterhin in der ersten Leitung reflektiert wird,
   - daraus am Anschluss des Kodierer/Dekodierers mit der ersten Leitung ein erstes frequenzselektives Signal gemessen wird,
   - der Widerstand der zweiten Leitung zurückgesetzt wird und die erste Leitung an seinen ursprünglichen Anschluss geschaltet wird,
B)
   - die zweite Leitung an die elektrische Masse geschaltet wird,
   - ein Widerstand der ersten Leitung auf einen hohen Wert erhöht wird,
   - aus dem Kodierer/Dekodierer ein weiteres Tonsignal in die zweite Leitung abgegeben wird, welches ebenfalls in der zweiten Leitung reflektiert wird,
   - daraus am Anschluss des Kodierer/Dekodierers mit der zweiten Leitung ein zweites frequenzselektives Signal gemessen wird,
C)
   - eine Amplitudendifferenz zwischen dem ersten und dem zweiten frequenzselektiven Signal ermittelt wird,
   kann die Unsymmetrie des Teilnehmeranschlusses direkt aus der Amplitudendifferenz gemessen werden.

In anderen Worten müssen lediglich beide sequentiellen Messsequenzen A) und B) erfolgen, damit die Unsymmetrie mit Schritt C) ermittelt wird. Dabei können die Schaltung einer ersten der Leitungen an die Masse, die Erhöhung des Widerstandes der anderen der Leitungen, die Abgabe eines Tonsignals in die erste der Leitungen und die dortige Messung des frequenzselektiven Signals zentral, z.B. aus einer Telekommunikationsdienststelle mittels eines Aktivierungssignal, gesteuert werden. Die Schaltungen auf die elektrische Masse bzw. auf eine hochwiderständige Leitung, sowie die Schaltung für Abgabe/Aufnahme eines Tonsignals bzw. eines frequenzselektiven Signals können vorteilhafterweise in dem Teilnehmeranschluss (Teilnehmerschaltung SLIC oder/und Kodierer/Dekodierer CODEC gemäss bisherigem FIG 1) intern integriert werden, so dass kein externes Messgerät benötigt wird.

Vorrichtungsmässig wird ferner eine dazugehörige Einrichtung zur Überprüfung eines Teilnehmeranschlusses mit einer ersten und einer zweiten elektrischen Leitungen beschrieben, die über eine Teilnehmerschaltung an einem Kodierer/Dekodierer angeschlossen sind.
Dadurch dass der Kodierer/Dekodierer einen Tongenerator und eine frequenzselektive Messeinheit aufweist, die gemäss einer ersten und einer zweiten Konfiguration sequentiell steuerbar sind, wodurch die erste Konfiguration durch eine erste Schaltung der ersten Leitung an die elektrische Masse, durch eine Erhöhung des Widerstands der zweiten Leitung, durch eine Abgabe eines Tonsignals aus dem Tongenerator in die erste Leitung und durch eine Schaltung bzw. Aktivierung der frequenzselektiven Messeinheit am Anschluss des Kodierer/Dekodierers mit der ersten Leitung gebildet ist und ferner
dass die zweite Konfiguration durch eine Schaltung der zweiten Leitung an die Masse, durch eine Erhöhung des Widerstands der ersten Leitung, durch die Abgabe eines Tonsignals aus dem Tongenerator in die zweite Leitung und durch eine Schaltung der frequenzselektiven Messeinheit am Anschluss des Kodierer/Dekodierers mit der zweiten Leitung gebildet ist und anschließend dass die Messeinheit einen Differenzierer umfasst, mit welchem eine Amplitudendifferenz zwischen dem ersten und dem zweiten frequenzselektiven Signal ermittelt werden kann. Dabei kann die Unsymmetrie des Teilnehmeranschlusses direkt aus der Amplitudendifferenz gemessen werden. Die frequenzselektiven Signale werden in den entsprechenden aufgrund des davor eingespeisten Tonsignals in die Leitung einfach physikalisch reflektiert.

Zur Schaltung einer Leitung an die elektrische Masse bzw. zur Schaltung eines hohen Widerstands in der anderen Leitung kann ein einzelner erster steuerbarer Schalter eine der beiden Leitungen mit der Masse verbindet. Dieser Schalter ist im Bereich der Anschlüsse der Leitungen und der Teilnehmerschaltung (siehe Teilnehmerschaltung SLIC in FIG 1) angeordnet bzw. fixiert, so dass er einen internen Teil des Teilnehmeranschlusses bildet.

Ferner kann ein zweiter steuerbarer Schalter den Tongenerator wahlweise und gleichzeitig die Messeinheit mit einer der beiden Leitungen verbindet. Dieser zweite Schalter kann in dem Kodierer/Dekodierer angeordnet werden und durch externe Mittel mit dem ersten Schalter gesteuert werden, so dass alle steuerbaren Schalter zusammen jeweils für eine der sequentiellen Messsequenzen geschaltet werden können.

Vorteilhafte Ausgestaltungen der Erfindung sind in den Unteransprüchen dargelegt.

Anschließend wird die Erfindung in einem Ausführungsbeispiel anhand der Zeichnungen erläutert.

### Dabei zeigen

- FIG 2: eine erfindungsgemäße Einrichtung für eine erste Messsequenz,
- FIG 3: eine erfindungsgemäße Einrichtung mit einer kompletten Schaltungsvorrichtung.

In FIG 2 ist eine erfindungsgemäße Einrichtung für die bisher zitierte erste Messsequenz A) dargestellt, bei welcher aus einem Verfahren zur Überprüfung eines Teilnehmeranschlusses mit einer ersten und einer zweiten elektrischen Leitung a, b, die je über eine Teilnehmerschaltung SLIC an einem Kodierer/Dekodierer CODEC angeschlossen sind, wird erst mal die erste Leitung a an die elektrische Masse GND geschaltet. Dabei wird auch ein Widerstand RVb der zweiten Leitung b erhöht. Dieses kann durch eine Schaltung der Leitung b auf eine weitere parallele hoch widerständige Leitung erfolgen. Der hohe Wert des Widerstandes ist vor der Messsequenz definiert bzw. eingestellt. Sind die Leitung a, b derart geschaltet, kann die erste Messsequenz tatsächlich eingeleitet werden, indem aus dem Kodierer/Dekodierer CODEC ein Tonsignal Uab in die erste Leitung a abgegeben wird und am Anschluss des Kodierer/Dekodierers CODEC mit der ersten Leitung a ein erstes frequenzselektives (reflektiertes) Signal Iab gemessen wird. Dadurch wird die Gesamtimpedanz der ersten Leitung a gemessen.

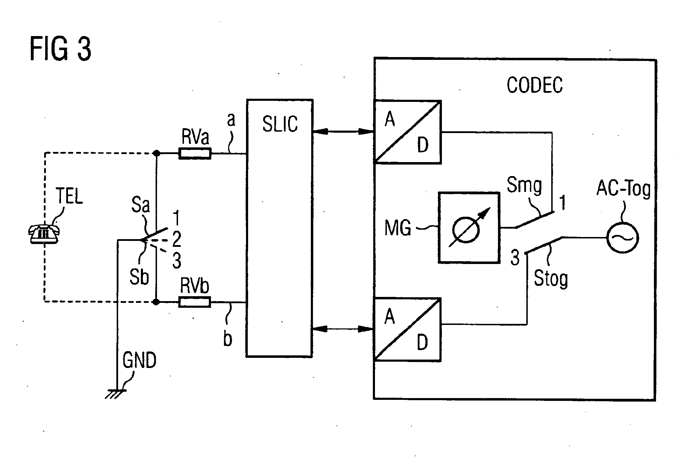

In FIG 2 (sowie in folgender FIG 3) wird aus Klarheitsgründen die hochohmige Schaltung bzw. die Erhöhung des Widerstandes der Leitungen a, b bei den beiden Messsequenzen A) und B) extern zur Teilnehmerschaltung SLIC dargestellt, jedoch sind die dazu benötigen Schalter am Anschlüssen der Leitungen a, b der Teilnehmerschaltung SLIC intern angeordnet. Sie könnten jedoch auch extern angeordnet werden.

Nicht dargestellt, jedoch einfach herzuleiten ist die zweite Messsequenz B), bei welcher eine zur Messsequenz A) umgekehrte Umschaltung der Leitungen a, b und die Abgabe eines weiteren Tonsignals sowie die Messung eines zweiten frequenzselektiven Signals an den umgekehrten Leitungen erfolgen. Genauer wird dementsprechend die zweite Leitung b an die Masse geschaltet, ein Widerstand RVa der ersten Leitung a erhöht, aus dem Kodierer/Dekodierer CODEC das weitere Tonsignal in die zweite Leitung b abgegeben und am Anschluss des Kodierer/Dekodierers CODEC mit der zweiten Leitung b das zweites frequenzselektives Signal gemessen. Damit kann eine Amplitudendifferenz zwischen dem ersten und dem zweiten frequenzselektiven Signal ermittelt werden, aus welcher die Unsymmetrie zwischen den beiden Anschlüssen an den Leitungen a, b direkt abgelesen wird.

Dabei weist der Kodierer/Dekodierer CODEC einen Tongenerator AC-Tog und eine frequenzselektive Messeinheit MG auf, die gemäss einer ersten und einer zweiten Konfiguration sequentiell steuerbar sind, wodurch die erste Konfiguration durch die erste Schaltung der ersten Leitung a an die Masse GND, durch eine Erhöhung des Widerstands RVb der zweiten Leitung b, durch die Abgabe des Tonsignals Uab aus dem Tongenerator AC-Tog in die erste Leitung a und durch die Schaltung der frequenzselektiven Messeinheit MG am Anschluss des Kodierer/Dekodierers CODEC mit der ersten Leitung a gebildet ist, und anschließend die zweite Konfiguration nun durch die Schaltung der zweiten Leitung b an die Masse, durch die Erhöhung des Widerstands RVa der ersten Leitung a, durch die Abgabe eines weiteren Tonsignals aus dem Tongenerator AC-Tog in die zweite Leitung b und durch die Schaltung der frequenzselektiven Messeinheit MG am Anschluss des Kodierer/Dekodierers CODEC mit der zweiten Leitung b gebildet ist. Zur Ermittlung der Amplitudendifferenz zwischen den beiden gemessenen frequenzselektiven Signalen kann die Messeinheit einen Differenzierer umfassen oder mit einem Differenzierer in Verbindung stehen.

Ebenfalls in FIG 2 ist eine mögliche vorteilhafte Schaltungsvorrichtung dargestellt. Ein erster steuerbarer Schalter Sa ist am Anschluss der Teilnehmerschaltung SLIC mit der Leitung a angeordnet, so dass eine gewünschte Verbindung mit der elektrischen Masse GND möglich ist. Ebenfalls sind zwei weitere steuerbare Schalter Smg, Stog im Kodierer/Dekodierer CODEC verwendet, welche je zwischen einem analogen-digitalen Wandler A/D an einem Anschluss des Kodierer/Dekodierers CODEC und der Messeinheit MG bzw. dem Tongenerator AC-Tog angeordnet sind. Alle steuerbare Schalter werden zusammen geschaltet werden, so dass die Messsequenz A) gemäss FIG 2 ordnungsgemäß erfolgt. Analoge Anschlüsse der analogen-digitalen Wandler A/D im Kodierer/Dekodierers CODEC sind mit den Leitungen a, b über Anschlüsse der Teilnehmerschaltung SLIC verbunden.

Schließlich wird in FIG 3 eine erfindungsgemäße Einrichtung gemäss FIG 2 mit einer kompletten Schaltungsvorrichtung dargestellt. Dabei wird zusätzlich zu FIG 2 ein steuerbarer Schalter Sb für die Leitung b an dem Anschluss der Teilnehmerschaltung SLIC mit der Leitung b dargestellt. Der Schalter Sb ist eigentlich der Schalter Sa (in einer Position 1 für die Messsequenz A) ) aus FIG 2, jedoch in einer Position 3 für die Messsequenz B). Sollte keine Überprüfung des Teilnehmeranschlusses erfolgen, kann der Schalter Sa, Sb auf eine Position 2 angebracht werden, die eine Verbindung der Leitungen a, b mit der Masse GND verbietet, jedoch eine Verbindung mit z.B. einem analogen Telefon TEL über die Leitungen a, b ermöglicht.

Im Kodierer/Dekodierer CODEC ist gemäss FIG 3 und aus graphischen Klarheitsgründen der Schalter Smg für die Messeinheit MG für die Position 1 des Schalters Sa, d.h. für die Messsequenz A), jedoch den Schalter Stog für den Tongenerator AC-Tog für die Position 3 des Schalters Sb, d.h. für die Messsequenz B) dargestellt. Die Schalter Smg, Stog können selbstverständlich synchron zu den Schaltern Sa, Sb in die jede Positionen 1, 2, 3 gemäss den Schalter Sa, Sb angebracht werden.

## Patentansprüche

1. Verfahren zur Überprüfung eines Teilnehmeranschlusses mit einer ersten und einer zweiten elektrischen Leitung (a, b), die je über eine Teilnehmerschaltung (SLIC) an einem Kodierer/Dekodierer (CODEC) angeschlossen sind,
**dadurch gekennzeichnet, dass**
- die erste Leitung (a) an die Masse geschaltet wird,
- ein Widerstand (RVb) der zweiten Leitung (b) erhöht wird,
- aus dem Kodierer/Dekodierer ein Tonsignal in die erste Leitung (a) abgegeben wird,
- am Anschluss des Kodierer/Dekodierers mit der ersten Leitung (a) ein erstes frequenzselektives Signal gemessen wird,
- die zweite Leitung (b) an die Masse geschaltet wird,
- ein Widerstand (RVa) der ersten Leitung (a) erhöht wird,
- aus dem Kodierer/Dekodierer ein weiteres Tonsignal in die zweite Leitung (b) abgegeben wird,
- am Anschluss des Kodierer/Dekodierers mit der zweiten Leitung (b) ein zweites frequenzselektives Signal gemessen wird,
- eine Amplitudendifferenz zwischen dem ersten und dem zweiten frequenzselektiven Signal ermittelt wird.

2. Verfahren nach Anspruch 1,
**dadurch gekennzeichnet, dass**
die Schaltung einer Leitung an die Masse, die Erhöhung des Widerstandes der anderen Leitung, die Abgabe eines Tonsignals und die Messung des frequenzselektiven Signals in die Leitung zentral gesteuert werden.

3. Einrichtung zur Überprüfung eines Teilnehmeranschlusses mit einer ersten und einer zweiten elektrischen Leitungen (a, b), die über eine Teilnehmerschaltung (SLIC) an einem Kodierer/Dekodierer (CODEC) angeschlossen sind,
**dadurch gekennzeichnet, dass**
der Kodierer/Dekodierer einen Tongenerator (AC-Tog) und eine frequenzselektive Messeinheit (MG) aufweist, die gemäss einer ersten und einer zweiten Konfiguration sequentiell steuerbar sind, wodurch die erste Konfiguration durch eine erste Schaltung der ersten Leitung (a) an die Masse, durch eine Erhöhung des Widerstands (RVb) der zweiten Leitung (b), durch eine Abgabe eines Tonsignals aus dem Tongenerator in die erste Leitung (a) und durch eine Schaltung der frequenzselektiven Messeinheit am Anschluss des Kodierer/Dekodierers mit der ersten Leitung (a) gebildet ist und anschließend
die zweite Konfiguration durch eine zweite Schaltung der zweiten Leitung (b) an die Masse, durch eine Erhöhung des Widerstands (RVa) der ersten Leitung (a), durch die Abgabe eines Tonsignals aus dem Tongenerator in die zweite Leitung (b) und durch eine Schaltung der frequenzselektiven Messeinheit am Anschluss des Kodierer/Dekodierers mit der zweiten Leitung (b) gebildet ist und
dass die Messeinheit einen Differenzierer umfasst.

4. Einrichtung nach Anspruch 3,
**dadurch gekennzeichnet, dass**
ein erster steuerbarer Schalter (Sa, Sb) eine der beiden Leitungen (a, b) mit der Masse verbindet.

5. Einrichtung nach Anspruch 3 oder 4,
**dadurch gekennzeichnet, dass**
ein zweiter steuerbarer Schalter (Stog, Smg) den Tongenerator und die Messeinheit (MG) mit einer der beiden Leitungen (a, b) verbindet.

6. Einrichtung nach Anspruch 4 oder 5,
**dadurch gekennzeichnet, dass**
die steuerbaren Schalter (Sa, Sb, Ston, Smg) zusammen geschaltet werden.

## Claims

1. Method for checking a subscriber line with a first and a second electrical line (a, b) which are each connected to an encoder/decoder (CODEC) via a subscriber line circuit (SLIC),
**characterized in that**
- the first line (a) is connected to the ground,
- a resistance (RVb) of the second line (b) is increased,
- the encoder/decoder outputs an audio signal into the first line (a),
- a first frequency-selective signal is measured at the point at which the encoder/decoder is connected to the first line (a),
- the second line (b) is connected to the ground,
- a resistance (RVa) of the first line (a) is increased,
- the encoder/decoder outputs a further audio signal into the second line (b),
- a second frequency-selective signal is measured at the point at which the encoder/decoder is connected to the second line (b),
- an amplitude difference between the first and second frequency-selective signals is ascertained.

2. Method according to Claim 1,
**characterized in that**
the connection of a line to the ground, the increase in the resistance of the other line, the output of an audio signal and the measurement of the frequency-selective signal in the line are controlled centrally.

3. Device for checking a subscriber line with a first and a second electrical line (a, b) which are connected to an encoder/decoder (CODEC) via a subscriber line circuit (SLIC),
**characterized in that**
the encoder/decoder has a tone generator (AC-Tog) and a frequency-selective measuring unit (MG), these being able to be controlled sequentially on the basis of a first and a second configuration, which means that the first configuration is formed by virtue of first connection of the first line (a) to the ground, by virtue of an increase in the resistance (RVb) of the second line (b), by virtue of output of an audio signal from a tone generator into the first line (a) and by virtue of connection of the frequency-selective measuring unit to the point at which the encoder/decoder is connected to the first line (a), and then
the second configuration is formed by virtue of second connection of the second line (b) to the ground, by virtue of an increase in the resistance (RVa) of the first line (a), by virtue of output of an audio signal from a tone generator into the second line (b) and by virtue of connection of the frequency-selective measuring unit to the point at which the encoder/decoder is connected to the second line (b), and
**in that** the measuring unit comprises a differentiator.

4. Device according to Claim 3,
**characterized in that**
a first controllable switch (Sa, Sb) connects one of the two lines (a, b) to the ground.

5. Device according to Claim 3 or 4,
**characterized in that**
a second controllable switch (Stog, Smg) connects the tone generator and the measuring unit (MG) to one of the two lines (a, b).

6. Device according to Claim 4 or 5,
**characterized in that**
the controllable switches (Sa, Sb, Ston, Smg) are switched together.

## Revendications

1. Procédé pour vérifier un raccordement d'abonné avec une première et une deuxième ligne électrique (a, b) qui sont raccordées à un codeur / décodeur (CODEC) chacune par l'intermédiaire d'un circuit d'abonné (SLIC),
**caractérisé en ce que**
- la première ligne (a) est connectée à la masse,
- une résistance (RVb) de la deuxième ligne (b) est augmentée,
- un signal sonore est injecté dans la première ligne (a) à partir du codeur / décodeur,
- un premier signal sélectif en fréquence est mesuré au niveau du raccordement du codeur / décodeur à la première ligne (a),
- la deuxième ligne (b) est connectée à la masse,
- une résistance (RVa) de la première ligne (a) est augmentée,
- un autre signal sonore est injecté dans la deuxième ligne (b) à partir du codeur / décodeur,
- un deuxième signal sélectif en fréquence est mesuré au niveau du raccordement du codeur / décodeur à la deuxième ligne (b),
- une différence d'amplitude entre le premier et le deuxième signal sélectif en fréquence est déterminée.

2. Procédé selon la revendication 1, **caractérisé en ce que** la connexion d'une ligne à la masse, l'augmentation de la résistance de l'autre ligne, l'injection d'un signal sonore et la mesure du signal sélectif en fréquence dans la ligne sont commandées centralement.

3. Dispositif pour vérifier un raccordement d'abonné avec une première et une deuxième ligne électrique (a, b) qui sont raccordées à un codeur / décodeur (CODEC) chacune par l'intermédiaire d'un circuit d'abonné (SLIC), **caractérisé en ce que** le codeur / décodeur comporte un générateur sonore (AC-Tog) et une unité de mesure sélective en fréquence (MG) qui peuvent être commandés séquentiellement selon une première et une deuxième configuration, ce par quoi la première configuration est réalisée par une première connexion de la première ligne (a) à la masse, par une augmentation de la résistance (RVb) de la deuxième ligne (b), par une injection d'un signal sonore dans la première ligne (a) à partir du générateur sonore et par une connexion de l'unité de mesure sélective en fréquence au niveau du raccordement du codeur / décodeur à la première ligne (a) et, ensuite,
la deuxième configuration est réalisée par une deuxième connexion de la deuxième ligne (b) à la masse, par une augmentation de la résistance (RVa) de la première ligne (a), par l'injection d'un signal sonore dans la deuxième ligne (b) à partir du générateur sonore et par une connexion de l'unité de mesure sélective en fréquence au niveau du raccordement du codeur / décodeur à la deuxième ligne (b) et
**en ce que** l'unité de mesure comporte un différenciateur.

4. Dispositif selon la revendication 3, **caractérisé en ce qu'**un premier commutateur commandable (Sa, Sb) relie l'une des deux lignes (a, b) à la masse.

5. Dispositif selon la revendication 3 ou 4, **caractérisé en ce qu'**un deuxième commutateur commandable (Stog, Smg) relie le générateur sonore et l'unité de mesure (MG) à l'une des deux lignes (a, b).

6. Dispositif selon la revendication 4 ou 5, **caractérisé en ce que** les commutateurs commandables (Sa, Sb, Ston, Smg) sont interconnectés.
